# EUROPÄISCHE PATENTSCHRIFT

(11) **EP 2 836 391 B1**
(45) Veröffentlichungstag und Bekanntmachung des Hinweises auf die Patenterteilung: **18.11.2015**
(21) Anmeldenummer: 14703856.6
(22) Anmeldetag: 11.02.2014
(51) Int. Cl.: B60M 1/34

(54) **ISOLIERPROFIL, SCHLEIFLEITUNG UND VERFAHREN ZUR HERSTELLUNG EINER SCHLEIFLEITUNG**
INSULATING PROFILE, CONDUCTOR LINE AND METHOD FOR PRODUCING A CONDUCTOR LINE
PROFILÉ ISOLANT, LIGNE DE CONTACT ET PROCÉDÉ PERMETTANT DE PRODUIRE UNE LIGNE DE CONTACT

(30) Priorität: 01.07.2013 DE 102013106889
(43) Veröffentlichungstag der Anmeldung: 18.02.2015
(73) Patentinhaber: Conductix-Wampfler GmbH, 79576 Weil am Rhein-Märkt (DE)
(72) Erfinder: SEIDEL, Dieter, 79585 Steinen (DE)
(74) Vertreter: Charrier, Rapp & Liebau
(86) Internationale Anmeldenummer: PCT/EP2014/052661
(87) Internationale Veröffentlichungsnummer: WO 2015/000605

(56) Entgegenhaltungen:
- DE-C- 677 484
- FR-A1- 2 401 791
- GB-A- 1 566 158

## Beschreibung

Die Erfindung betrifft ein Isolierprofil für eine Schleifleitung nach dem Oberbegriff des Anspruchs 1, eine Schleifleitung nach dem Oberbegriff des Anspruchs 14 und ein Verfahren zur Herstellung einer solchen Schleifleitung nach dem Oberbegriff des Anspruchs 16.

In der DE 71 15 690 U1 ist ein als U-Profil ausgebildeter Schleifleitungskanal aus nicht leitendem Material für eine im Wesentlichen bandförmige Stromschiene offenbart. Die Stromschiene wird dabei so hochkant in den Schleifleitungskanal eingesteckt, dass etwa die Hälfte der Stromschiene aus dem U-Profil herausschaut. Das überstehende Teil der Stromschiene kann dann von einem Stromabnehmer des zu versorgenden Fahrzeugs schleifend kontaktiert werden. Eine derart offen liegend, Strom führende und unter Spannung stehende Stromschiene muss zum Schutz von Personen und Geräten unbedingt verhindert werden.

Die DE 40 42 394 A1 betrifft ein Stromschienensystem mit Stromschienen, die ein tragendes Gehäuse und ein in dem Gehäuse angeordnetes Isolationsprofil aufweisen, in dem die elektrischen Leiter untergebracht sind. Die Leiter sind dabei in längs verlaufenden Rippen angeordnet, welche gegen unmittelbare Berührung schützen und lediglich sehr schmale, kleine Schlitze zum Einführen der Leiter in eine nach unten geöffnete Hohlkehle aufweisen. Weiter wird die Zugänglichkeit der dortigen Leiter durch ein Abdeckprofil verhindert, welches das Isolierprofil vollständig nach außen abschließt. Der Eingriff eines Stromabnehmerkontakts eines Schleifleitungssystems ist dort nicht möglich.

Die EP 1 049 227 B1 betrifft eine Verteilungsschiene mit Berührungsschutz, wobei dort Leiterelemente senkrecht in Aufnahmekammern gesteckt werden und nach der Montage aus der dortigen Aufnahmekammer herausragen. Der Berührungsschutz wird dadurch sichergestellt, dass die Leiter dort an der nach außen stehenden Seite mit einem Isolierprofil aus nicht leitendem Material abgedeckt sind, so dass ein direkter Kontakt nicht möglich ist. Die elektrische Verbindung zu dort örtlich fest und unbeweglich angeordneten Stromabnehmern wird mittels zweier zangenförmiger, zueinander gewandter Kontakte sichergestellt, welche über die isolierende Abdeckung an der Stirnseite der Leiter geschoben werden und dann mit dem dahinterliegenden nicht isolierten elektrischen Leiter kontaktieren. Ein Stromabnehmerkontakt einer Schleifleitung, welcher auf der Leiteranordnung entlangschleifen kann, kann dort nicht verwendet werden.

Die DE 72 46 552 U betrifft ein Flachprofil mit Flachleitern, welches zur Versorgung von ortsfesten Stromabnehmern vorgesehen ist. Dort werden in ein Isolierstoffprofil eingelegte elektrisch leitende Flachleiter in eine metallische Aufnahmekammer eingesetzt, so dass die elektrischen Flachleiter gegenüber der metallischen Aufnahmekammer isoliert sind. Die elektrischen Flachleiter werden dort bevorzugt zusammen mit der Herstellung des Flachprofils in einem Arbeitsgang hergestellt, also nicht vor Ort montiert. Vielmehr wird vor Ort das gesamte Isolierprofil mit eingelegten Flachleitern nur noch in die Aufnahmekammer des metallischen Trägerprofils eingesetzt. Um die Aufnahme des Flachleiters in das Isolierprofil zu erleichtern, weisen die dortigen Aufnahmekammern einen trichterförmigen Eingangsbereich auf. Dies hat den Nachteil, dass die Flachleiter unmittelbar in die Aufnahmekammern eingesetzt werden müssen, da sie ansonsten aufgrund der nach außen offenen Trichterform aus dem Isolierprofil herausfallen, insbesondere bei senkrecht stehendem oder von oben herunterhängenden Isolierprofil.

Die DE 40 05 069 A1 betrifft eine mehrfeldrige Schaltanlage mit einer Sammelschienenanordnung, wobei dort mehrere Sammelschienen durch eine spezielle Montagevorrichtung fest in einer vordefinierten Stellung gehalten werden, bevor sie in den Sammelschienenträger endgültig eingesetzt werden.

Die GB 1 566 158 A offenbart ein Überkopf gehaltenes Isolierprofil mit zwei Aufnahmen für in Längsrichtung verlaufende Stromschienen, welche in der Aufnahme über eine Schnappverbindung gehalten werden. Zum Einsetzen in die Aufnahme werden die Stromschienen in eine Vorkammer eingeführt, welche aber deutlich größer als die Stromschienen ist, so dass diese während des Einsetzens in die Aufnahme ständig gehalten werden müssen. Eine einfache Montage ist dort somit nicht möglich.

Neuere Schleifleitungen sehen deshalb vor, die Stromschienen vollständig in Isolierprofilen anzuordnen, die lediglich eine in Längsrichtung des Isolierprofils verlaufende Öffnung für einen Schleifkontakt, z.B. eine Kohlebürste eines Stromabnehmers aufweisen. So offenbart die DE 10 2007 034 930 A1 ein Isolierprofil für eine Schleifleitung mit einem nicht leitenden Grundkörper und einem fest daran angeordneten elektrisch leitenden Element. Der Grundkörper weist dabei ein Scharnier auf, so dass das leitende Element an zwei zusammenklappbaren Teilen des Grundkörpers angeordnet werden können. Die zusammenklappbaren Teile werden bei der Montage zusammengeklappt und in zusammengeklapptem Zustand in einen Aufnahmekörper eingesetzt, so dass die leitende Elemente gegen äußere Zugriffe geschützt zwischen den zusammenklappbaren Teilen des Grundkörpers zu liegen kommen. Diese Konstruktion ist aufwendig, da der Grundkörper des Isolierprofils stets mit der Stromschiene verbunden werden muss. Auch ist die Montage umständlich, da das Isolierprofil mit leitenden Elementen zusammengeklappt und in diesem Zustand in den Aufnahmekörper eingesteckt werden muss.

Ein weiteres Problem bei bekannten Isolierprofilen ist die Montage vor Ort. Denn bei den bekannten Isolierprofilen werden die Stromschienen oft erst vor Ort in die Aufnahmekammern der Isolierprofile eingebracht. Typischerweise werden die Stromschienen dabei als Bandmaterial geliefert und von der Stirnseite in die bereits montierten Isolierprofile eingezogen, oft auch über Längen von weiter über 10 Meter, zum Teil sogar über 100 Meter. Da die Toleranzen der Aufnahmekammer zum festen Sitze der Stromschiene in der Aufnahmekammer relativ klein sind, führen bereits kleinere Abweichungen der Stromschiene von der vorgegebenen Form oder geringfügige Verschmutzungen der Stromschiene oder der Aufnahmekammer dazu, dass die Stromschiene in der Aufnahmekammer verkantet und eine das weitere Einziehen der Stromschiene blockiert wird, insbesondere bei größeren Längen. Es muss dann vor Ort die Fehlerstelle gefunden und nachbearbeitet werden, was aufwendig und zeitraubend und oft auch mit großem Kraftaufwand verbunden ist. Da Schleifleitungen oft aber an Hallendecken in mehreren Metern Höhe montiert werden, besteht für den Monteur oft keine Möglichkeit, durch kräftiges Ziehen die Stromschiene weiter einzuziehen. Eine aufwendige Demontage der Isolierprofile ist dann nötig.

Der Erfindung liegt deshalb die Aufgabe zugrunde, ein Isolierprofil, eine Schleifleitung und ein Verfahren zur Herstellung einer solchen Schleifleitung zu schaffen, welche die oben genannten Nachteile überwinden und eine einfache und schnelle Montage einer Schleifleitung, auch unter den erschwerten Bedingungen ermöglichen.

Die Erfindung löst diese Aufgabe durch ein Isolierprofil mit den Merkmalen des Anspruchs 1, eine Schleifleitung mit den Merkmalen des Anspruchs 14 und ein Verfahren zur Herstellung einer Schleifleitung nach Anspruch 16. Vorteilhafte Ausgestaltungen und zweckmäßige Weiterbildungen der Erfindung sind in den abhängigen Ansprüchen angegeben.

Ein eingangs genanntes Isolierprofil, bei dem sich an die Aufnahmekammer eine zwischen den Profilschenkeln angeordnete Montagekammer mit einer in Längsrichtung verlaufenden Einführöffnung anschließt, ist erfindungsgemäß dadurch gekennzeichnet, dass an den Profilschenkeln im Bereich der Montagekammer bevorzugt einwärts gerichtete Haltevorsprünge vorgesehen sind. Hierdurch lässt sich der Vorgang des Einbringens und Befestigen der Stromschiene in zwei Schritte aufteilen, nämlich in das weniger Genauigkeit erfordernde Einlegen der Stromschiene in die Montagekammer und das darauf folgende Eindrücken der Stromschiene aus der Montagekammer in die endgültige, fixierte Stellung in der Aufnahmekammer. Bevorzugt kann die Stromschiene dabei bandförmig mit einer im wesentlichen rechteckigen Außenkontur geformt sein.

Bevorzugt können zwischen Aufnahmekammer und Montagekammer Haltemittel zum Halten der Stromschiene in der Aufnahmekammer vorgesehen sein.

Weiter können die Haltemittel an mindestens einem der Profilschenkel angeordnet und bevorzugt zum Innenraum hin gerichtet sein, so dass keine zusätzlichen Befestigungsmittel vorgesehen werden müssen. Dabei kann die Aufnahmekammer vorteilhaft zwischen den Profilschenkeln, einem Profilboden und den Haltemitteln gebildet sein.

In einer vorteilhaften Ausgestaltung können die Haltemittel in Längsrichtung unterbrochen sein, wobei die Haltemittel an einem oder beiden Profilschenkeln angeordnet sein können. Dabei können vorteilhaft an einander gegenüberliegenden Profilschenkeln angeordnete Haltemittel in Längsrichtung versetzt zueinander angeordnet sein.

In einer montagetechnisch günstigen Ausführung können die Haltemittel von der Montagekammer aus gesehen mindestens eine von den Profilschenkeln zur Aufnahmekammer hin geneigte Gleitfläche aufweisen. Hierdurch kann die Stromschiene leichter von der Montagekammer in die Aufnahmekammer gebracht werden.

Bevorzugt können die Haltemittel von der Aufnahmekammer aus gesehen mindestens eine im wesentlichen senkrecht von den Profilschenkel abstehende Haltefläche aufweisen, um die Stromschiene gut in der Aufnahmekammer halten zu können.

Vorteilhaft können die Haltemittel von der Montagekammer zur Aufnahmekammer hin kürzer werden, so dass Stromschienen unterschiedlicher Dicke je nach Bedarf in ein Isolierprofil eingesetzt werden können. Hierdurch lässt sich die Schleifleitung einfach an unterschiedliche Leistungsniveaus der elektrischen Energieübertragung anpassen. Beispielsweise kann eine bestehende Schleifleitung bei bereits montierten erfindungsgemäßen Isolierprofilen einfach umgerüstet werden, in dem nur die Stromschienen ausgetauscht werden.

Bevorzugt können die Haltemittel und/oder das Isolierprofil elastisch sein, so dass die Haltemittel beim Eindrücken der Stromschiene von der Montagekammer in die Aufnahmekammer bzw. die Profilschenkel nachgeben können, bis die Stromschiene in der Aufnahmekammer sitzt.

Vorteilhaft können die Haltevorsprünge im Bereich der Einführöffnung und bevorzugt zur Aufnahmekammer einwärts gerichtet vorgesehen sein. Hierdurch können bei der Montage die Stromschienen sicher in der Montagekammer gehalten werden.

Vorteilhaft können die Weite der Aufnahmekammer im wesentlichen der Breite der Stromschiene und/oder die Höhe der Aufnahmekammer im wesentlichen der Dicke der Stromschiene entsprechen oder geringfügig größer sein, um den Sitz der Stromschiene in der Aufnahmekammer weiter zu verbessern.

Bevorzugt kann die Höhe der Montagekammer kleiner sein als die Breite der Stromschiene, bevorzugt kleiner als ein Viertel und besonders bevorzugt kleiner als die Hälfte der Breite der Stromschiene. Hierdurch kann die Stromschiene in einer günstigen, relativ steil gekippten Vormontageposition in der Montagekammer angeordnet und die Gefahr eines "Umkippens" der Stromschiene in der Montagekammer verringert werden, so dass sich das nachfolgende Eindrücken in die Aufnahmekammer vereinfacht.

Bevorzugt kann die Höhe der Montagekammer größer sein als die Dicke der Stromschiene, bevorzugt größer als das Anderthalbfache und besonders bevorzugt größer als das Doppelte der Dicke der Stromschiene. Hierdurch kann die Stromschiene in einer günstigen, relativ steil, aber nicht zu steil gekippten Vormontageposition in der Montagekammer angeordnet werden, so dass sich das nachfolgende Eindrücken in die Aufnahmekammer vereinfacht.

Bevorzugt kann das Isolierprofil einen im wesentlichen U-förmigen Querschnitt aufweisen.

In einer vorteilhaften Ausführung kann ein Isolierprofil mehrere Aufnahmekammern aufweisen, wobei in einer vorteilhaften Weiterbildung mindestens eine der Aufnahmekammern eine andere Form, insbesondere Innenkontur aufweist als die anderen Aufnahmekammern.

Bevorzugt können obige und nachfolgend beschriebene Isolierprofile bei Schleifleitungen verwendet werden, bei denen entlang der Isolierprofile geführte Stromabnehmerkontakte in das oder die Isolierprofile eingreifen und mit den einzelnen in die Isolierprofile eingelegten Stromschienen gleitend kontaktieren können. Die Isolierprofile können vorteilhaft aber auch in anderen Anwendungen verwendet werden, beispielsweise als elektrisch leitende Verbindungen ohne gleitenden Abgriff von Stromabnehmern, zum Beispiel im Bereich der Beleuchtung.

Eine eingangs genannte Schleifleitung weist ein oben und nachfolgend beschriebenes erfindungsgemäßes Isolierprofil auf Bevorzugt können dabei zwei oder mehr erfindungsgemäße Isolierprofile, bevorzugt nebeneinander angeordnet sein. Weiter bevorzugt kann mindestens eine Aufnahmekammer eine andere Form aufweisen als die anderen Aufnahmekammern, wobei die Stromschienen jeweils an die Form der Aufnahmekammern angepasst sind.

Weiter vorteilhaft können die Stromschiene und die Aufnahmekammer zum verwechslungssicheren Einsetzen der Stromschiene in die Aufnahmekammer in ihrer Form, Außenkontur und/oder Querschnitt aneinander angepasst sind. In einer vorteilhaften Ausführung kann die Stromschiene dabei aus einer Trägerschicht und einer daran angeordneten Gleitschicht gebildet sein, wobei die Form der Stromschiene und der Aufnahmekammer so aneinander angepasst sind, dass die Stromschiene nur mit zur Montageöffnung und Einfiihröffnung weisender Gleitschicht in die Aufnahmekammer eingesetzt werden kann. Bevorzugt ist die Form im Querschnitt bzw. der Außenkontur mond- bzw. sichelförmig oder V-förmig, wobei die konkave bzw. eingezogene Seite zur Montagöffnung hinweist.

Ein eingangs genanntes Verfahren zur Herstellung einer erfindungsgemäßen Schleifleitung ist erfindungsgemäß gekennzeichnet durch die Schritte: a) Einlegen, Einziehen oder Einschieben mindestens einer Stromschiene in mindestens eine Montagekammer, und b) Eindrücken der Stromschiene von der Montagekammer in die Aufnahmekammer.

Bevorzugt kann das Eindrücken der Stromschiene in Schritt b) mittels eines Eindrückwerkzeuges und/oder mittels eines Schleifkontakts, insbesondere eines spezielle hierfür ausgebildeten Eindrückschleifkontakts, eines entlang der Schleifleitung geführten Stromabnehmers erfolgen. In einer montagetechnisch günstigen Ausführung können bei einer Schleifleitung mit mehreren Isolierprofilen und/oder mehreren Aufnahmekammern je Isolierprofil in Schritt b) mindestens zwei Stromschienen zugleich in die jeweilige Aufnahmekammer eingedrückt werden.

Weitere Besonderheiten und Vorteile der Erfindung ergeben sich aus der folgenden Beschreibung bevorzugter Ausführungsbeispiele anhand der Zeichnungen. Diese zeigen:
- **Fig. 1**: einen Querschnitt durch eine erfindungsgemäße Schleifleitung mit drei erfindungsgemäßen Isolierprofilen;
- **Fig. 2**: einen Querschnitt durch ein erfmdungsgemäßes Isolierprofil der Schleifleitung aus Fig. 1;
- **Fig. 3**: einen Querschnitt durch ein alternatives erfindungsgemäßes Isolierprofil;
- **Fig. 4**: einen Querschnitt durch ein weiteres alternatives erfindungsgemäßes Isolierprofil mit einer dickeren Stromschiene;
- **Fig. 5**: der Querschnitt durch das Isolierprofil aus Fig. 4 mit einer dünneren Stromschiene;
- **Fig. 6**: einen Querschnitt durch ein weiteres alternatives erfindungsgemäßes Isolierprofil mit einer dickeren Stromschiene;
- **Fig. 7**: der Querschnitt durch das Isolierprofil aus Fig. 6 mit einer dünneren Stromschiene;
- **Fig. 8**: einen Querschnitt durch eine alternative Ausführung einer erfindungsgemäßen Schleifleitung mit drei erfindungsgemäßen Isolierprofilen;
- **Fig. 9**: einen Querschnitt durch eine weitere alternative Ausführung einer erfindungsgemäßen Schleifleitung mit alternativem erfindungsgemäßen Isolierprofil;
- **Fig. 10**: einen Querschnitt durch eine alternative Ausführung einer erfindungsgemäßen Schleifleitung mit einem weiteren alternativen erfindungsgemäßen Isolierprofil;
- **Fig. 11**: einen Querschnitt durch eine weitere alternative Ausführung einer erfindungsgemäßen Schleifleitung mit einem weiteren alternativen erfindungsgemäßen Isolierprofil.

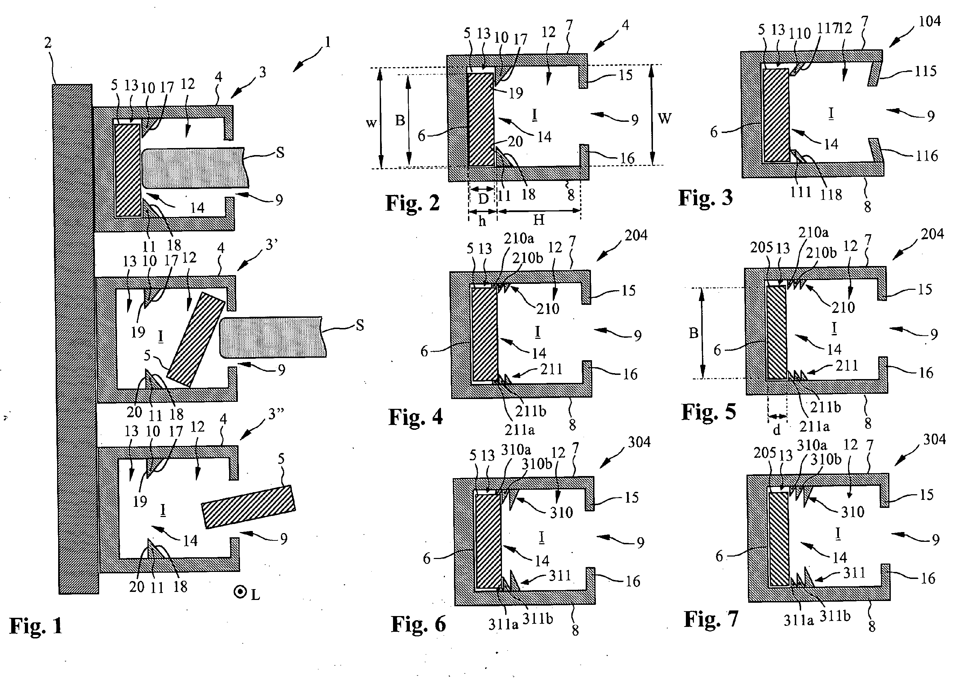

Fig. 1 zeigt einen Querschnitt durch eine erfindungsgemäße Schleifleitung 1, die zur Versorgung eines längs der Schleifleitung 1 verfahrbaren elektrischen Verbrauchers dient. Die Schleifleitung 1 und deren grundsätzlicher Aufbau und Funktionsweise ist an sich bekannt, so dass sich weitere detaillierte Ausführungen hierzu erübrigen.

Die Schleifleitung 1 weist drei an einer Tragstruktur 2 angeordnete, in einer Längsrichtung L der Schleifleitung 1 verlaufende Leiterstränge 3, 3', 3" auf. Die Leiterstränge 3, 3' und 3" sind im wesentlichen gebildet durch Isolierprofile 4, in deren Innenraum I in Längsrichtung L bandförmige, elektrisch leitende Stromschienen 5 eingesetzt sind. Die Stromschiene 5 hat die in Fig. 2 gezeigte Breite B und Höhe H. Da die Isolierprofile 4 und die Stromschienen 5 in Fig. 1 identisch ausgebildet sind, werden sie in Fig. 1 einheitlich mit den gleichen Bezugszeichen bezeichnet. Auch wird die Erfindung deshalb im Weiteren - soweit möglich - anhand des Leiterstrangs 3 beschrieben, entsprechende Ausführungen gelten aber auch für die anderen Leiterstränge 3' und 3 ".

Das in Fig. 2 im Detail gezeigte Isolierprofil 4 besteht aus einem nicht leitenden, bevorzugt elastischen oder teils elastischen Material wie Kunststoff und ist mit einem Profilboden 6 an der Tragstruktur 2 angebracht. Gegebenenfalls kann die Tragstruktur 2 auch einstückig mit den Isolierprofilen 4 hergestellt sein. Auch können je nach Anforderung an die elektrische Energieübertragung auch mehr oder weniger Isolierprofile 4 vorgesehen werden.

Vom Profilboden 6 des Isolierprofil 4 ragen in Längsrichtung L verlaufende U-förmig einander gegenüberliegende Profilschenkel 7, 8 zu einer Einführöffnung 9 des Isolierprofils 4 hin. Wie in Fig. 1 oben erkennbar, dient die Einführöffnung 9 im Betrieb der Schleifleitung 1 dazu, dass in an sich bekannter Weise ein angedeuteter Schleifkontakt S eines Stromabnehmers des zu versorgenden elektrischen Verbrauchers in das Isolierprofil 4 eingreifen und die Stromschiene 5 zur elektrischen Energieübertragung kontaktieren kann.

Bei der Montage der Schleifleitung 1 hingegen kann die Einführöffnung 9 dazu verwendet werden, die Stromschiene 5 in das Isolierprofil 4 einzusetzen. Alternativ kann die Stromschiene 5 auch stirnseitig in das Isolierprofil 4 eingeschoben bzw. eingezogen werden.

Da solche Schleifleitungen 1 oft größere Längen aufweisen, werden Isolierprofile 4, 4' und 4" und Stromschienen 5, 5' und 5" üblicherweise als aufgewickeltes Bandmaterial oder auf die maximal mögliche transportable Länge abgelängtes Stangenmaterial geliefert und erst vor Ort zusammengesetzt. Hierbei ergeben sich oft Probleme beim Einsetzen der Stromschienen 5, 5' und 5" in die Isolierprofile 4, 4' und 4", da sich beide bei größeren Längen leicht verwinden. Auch kommt es vor, dass bereits in die Isolierprofile 4, 4' und 4" eingesetzte Stromschienen 5, 5' und 5" wieder herausfallen, insbesondere, wenn die Isolierprofile 4, 4' und 4" über Kopf oder seitlich montiert werden, wie in Fig. 1 gezeigt.

Beim Isolierprofil 4 sind innenseitig an den Profilschenkeln 7, 8 voneinander beabstandete, als dreiecksförmige Rastnasen 10, 11 ausgebildete Haltemittel vorgesehen, welche den vom Profilboden 6 und den Profilschenkeln 7, 8 umgebenen Innenraum des Isolierprofils 4 in eine Montagekammer 12 mit Weite W und Höhe H und eine Aufnahmekammer 13 Weite w und Höhe h aufteilen. Zwischen den Rastnasen 10, 11 ist eine in Längsrichtung L des Isolierprofils 4 verlaufend Montageöffnung 14 vorgesehen, um die Stromschiene 5 in die Aufnahmekammer 13 einsetzen zu können.

Die Montagekammer 12 dient dazu, die Stromschiene 5 beim Einsetzen in das Isolierprofil 4 soweit aufzunehmen, dass sie in einer für die Endmontage in der Aufnahmekammer 13 günstigen Stellung gehalten wird. Vorteilhaft können hierzu die Profilschenkel 7, 8 an ihren freien Enden zur Einführöffnung 9 hin gerichtete Haltevorsprünge 15, 16 aufweisen, welche die Stromschiene 5 in der in Fig. 1 Mitte gezeichneten Stellung halten. Hierdurch kann die Stromschiene 5 in einer ungefähren Vormontage-Stellung gehalten werden, welche das nachfolgende ortsgenaue Fixieren der Stromschiene 5 in der Aufnahmekammer 13 erleichtert. Die Aufnahmekammer 13 mit der Weite w und der Höhe h wie auch die Halteelemente 10, 11 sind von ihren Abmessungen so ausgebildet, dass die bandförmige, im Querschnitt im wesentlichen rechteckige Stromschiene 5 darin möglichst bündig gehalten wird. Die Stromschiene 5 kann also auch bei Überfahrt des Schleifkontakts S des Stromabnehmers nicht aus der Aufnahmekammer 12 herausfallen oder aus ihrer Position in der Aufnahmekammer 12 ausweichen.

Bei der in Fig. 1 und 2 gezeigten Ausführungen der Haltemittel als dreiecksförmige Rastnasen 10, 11 kann die Stromschiene 5 von der Montagekammer 12 durch Andrücken in Richtung der Aufnahmekammer 13 über die Rastnasen 10, 11 geschoben werden. Die Rastnasen 10, 11 weichen dabei aufgrund ihrer Elastizität wie auch der Elastizität des Isolierprofils 4 in bekannter Weise aus und, bis die Stromschiene 5 am Profilboden 6 anliegt und die parallel zum Profilboden 6 verlaufenden, als Rastflächen 17, 18 ausgebildete Halteflächen über der Stromschiene 5 einschnappen.

Eine Fig. 3 gezeigte alternative Ausführung eines erfindungsgemäßen Isolierprofils 104 unterscheidet sich im Wesentlichen durch die Ausbildung der Haltemittel und der Enden der Profilschenkel 6, 7 von dem in Fig. 1 und 2 gezeigten Isolierprofil 4. Für gleiche Teile werden deshalb gleiche Bezugszeichen verwendet, und die Ausführungen zum Isolierprofil 4 gelten entsprechend.

Die Haltemittel beim Isolierprofil 104 sind als Raststege 110, 111 ausgebildet, welche von den Profilschenkeln 7, 8 schräg einwärts zum Profilboden 6 des Isolierprofils 104 hin gerichtet sind. Die Raststege 110, 111 lassen sich hierdurch beim Eindrücken der Stromschiene 5 einfach abbiegen und bewegen sich nach dem Eindrücken der Stromschiene 5 in die Aufnahmekammer 13 elastisch wieder in ihre in Fig. 4 gezeigte Grundstellung, in der sie die Stromschiene 5 federelastisch gegen den Profilboden 6 drücken. Die Raststege 110, 111 benötigen wenig Material und lassen sich leicht umbiegen. Auch die Raststege 110 und 111 weisen Gleitflächen 117, 118 auf der Seite der Montagekammer 12 auf.

Bei der Ausführung nach Fig. 3 sind die an den freien Enden der Profilschenkel 7, 8 angeordneten Haltevorsprünge 115, 116 einwärts zur Montagekammer 12 und dem Profilboden 6 hin abgeschrägt, wodurch das Einsetzen der Stromschiene 5 durch die Einführöffnung 9 erleichtert und die Gefahr des Herausfallens der Stromschiene 5 aus der Montagekammer weiter verringert wird. Diese Ausbildung der Haltevorsprünge 115, 116 kann auch bei den anderen hier beschriebenen und in den Zeichnungen gezeigten Ausführungen entsprechend verwendet werden.

Eine Fig. 4 und 5 gezeigte weitere alternative Ausführung eines erfindungsgemäßen Isolierprofils 204 unterscheidet sich wiederum im Wesentlichen durch die Ausbildung der Haltemittel vom Isolierprofil 4. Für gleiche Teile werden deshalb gleiche Bezugszeichen verwendet, und die Ausführungen zum Isolierprofil 4 bzw. 104 gelten entsprechend.

Beim Isolierprofil 204 werden als Haltemittel in Eindrückrichtung der Stromschiene 5 sägezahnförmig angeordnete Rastnasen 210, 211 verwendet, welche wiederum Gleitflächen auf der Seite der Montagekammer 12 und Rastflächen auf der Seite der Aufnahmekammer 13 aufweisen. Hierdurch kann in das Isolierprofil 204 nicht nur die Stromschiene 5 mit der einen Dicke D eingesetzt werden, an welche die Aufnahmekammer 13 angepasst ist. Vielmehr können dort auch Stromschienen anderen Dicke eingesetzt werden, beispielsweise die in Fig. 5 gezeigte flachere Stromschiene 205 mit der Dicke d und der Breite B.

Denn die dickere Stromschiene 5 kommt, wie in Fig. 4 gezeigt, unter dem in Fig. 4 mittleren Paar gegenüberliegender Rastnasen 210b, 211b zu liegen, während das vom Profilboden 6 aus gesehen unterste Paar Rastnasen 210a, 211 a durch die Stromschiene 5 zusammengedrückt werden. Die flachere Stromschiene 205 hingegen kommt, wie in Fig. 5 gezeigt, unter dem in Fig. 5 untersten Paar gegenüberliegender Rastnasen 210a, 211a zu liegen.

Diese Ausführung ermöglicht es somit auf einfache Weise, Stromschienen 5, 205 unterschiedlicher Dicke D bzw. d zu verwenden, so dass eine einfache Anpassung der elektrisch übertragbaren Leistung erfolgen kann, ohne das Isolierprofil 204 austauschen zu müssen. Abhängig von der Anzahl der sägezahnförmig angeordneten Rastnasen 210, 211 kann somit eine weite Spanne an unterschiedlich dicken Stromschienen abgedeckt werden. Hiermit kann auch eine bestehende Schleifleitung 1 einfach und schnell lediglich durch Austauschen der Stromschienen nachgerüstet werden.

Eine Fig. 6 und 7 gezeigte weitere alternative Ausführung eines erfindungsgemäßen Isolierprofils 304 ist eine Abwandlung des in Fig. 4 und 5 gezeigten Isolierprofils 204 und unterscheidet sich wiederum im Wesentlichen durch die Ausbildung der Haltemittel vom Isolierprofilen 204. Für gleiche Teile werden deshalb gleiche Bezugszeichen verwendet, und die Ausführungen zum Isolierprofil 204 gelten entsprechend.

Beim Isolierprofil 304 werden zusätzlich zu der entsprechenden Ausbildung in Fig. 4 und 5 sägezahnförmige Rastnasen 310, 311 zum Profilboden 6 hin immer kürzer, so dass sich die Montageöffnung 14 zur Aufnahmekammer hin aufweitet. Hierdurch kann der Halt unterschiedlich dicker Stromschienen 5, 205 in der Aufnahmekammer 13 noch verbessert werden, insbesondere für dickere Stromschienen 5. Denn ein in Fig. 6 gezeigtes mittleres Paar von Rastnasen 310b, 311b umgreift die dickere Stromschiene 5 stärker als das in Fig. 4 gezeigte entsprechende Paar von Rastnasen 210b, 211b, so dass die dickeren Stromschiene 5 noch fester gegen den Profilboden 6 gedrückt und besser in der Aufnahmekammer 13 gehalten wird.

Die Montage der Stromschiene 5 in dem Isolierprofil 4 wird nun aus Gründen der einfacheren Erläuterung anhand der drei in Fig. 1 gezeigten unterschiedlichen Stellungen der Stromschiene 5 in den übereinander angeordneten Isolierprofilen 4 im Detail beschrieben. Grundsätzlich erfolgt die Montage einer einzelnen Stromschiene 5 in einem einzigen Isolierprofil 4 ganz entsprechend.

Zunächst wird die Stromschiene 5 durch die Einführöffnung 9 in die Montagekammer 12 des Isolierprofils 4 eingesetzt, wie in Fig. 1 gezeigt. Alternativ kann die Stromschiene 5 auch stirnseitig, also senkrecht auf der Schnittebene in Fig. 1, in die Montagekammer 14 eingeschoben werden.

Die Stromschiene 5 kommt dann in der Montagekammer 12 in der in Fig. 1 Mitte gezeigten Stellung zu liegen, und kann aufgrund der Haltevorsprünge 15, 16 nicht herauskippen. Alternativ kann die Stromschiene auch schräg gegen die obere Rastnasen 10 zu liegen kommen, so dass ein Herausfallen aus der Montagekammer 12 auch ohne Haltevorsprünge 15, 16 nicht zu befürchten ist.

Damit die Stromschiene 5 derart steil und nicht zu flach in der Montagekammer 12 zu liegen kommt, kann die Höhe H der Montagekammer 12 vorteilhaft kleiner als die Breite B der Stromschiene 5 gewählt werden, bevorzugt 25% und besonders bevorzugt 50% kleiner, jeweils bezogen auf die Breite B der Stromschiene. Hierdurch wird die Gefahr verringert, dass die Stromschiene 5 beim Einführen in die Montagekammer 12 umkippt und auf dem in Fig. 2 unteren Profilschenkel 8 zu liegen kommt.

Um die Stromschiene 5 in der Montagekammer 12 wie oben beschrieben in eine ungefähre Vormontag-Stellung einbringen zu können, in der die Stromschiene 5 noch etwas Spiel hat, kann die Höhe H der Montagekammer 12 vorteilhaft größer als die Dicke D der Stromschiene 5 sein, bevorzugt größer als das Anderthalbfache und besonders bevorzugt größer als das Doppelte der Dicke D bzw. d der Stromschiene 5. Bei den in Fig. 4 bis 7 gezeigten Ausführungen von Isolierprofilen 204 bzw. 304 wird als Maß für die Höhe H der Montagekammer 12 die größtmögliche Dicke einer Stromschiene herangezogen, also die durch die am weitesten vom Profilboden 6 entfernten Rastnasen 210, 211 bzw. 310, 311.

Sobald die Stromschiene 5 in die Montagekammer 12 eingeführt ist, wird die Stromschiene 5 von Hand, über ein spezielles Eindrückwerkzeug oder mittels des Schleifkontakts S des Stromabnehmers in die Aufnahmekammer 13 eingedrückt, wie in Fig. 1 Mitte und oben angedeutet. Das Eindrückwerkzeug kann dabei vorteilhaft der Form eines Schleifkontakts S nachgebildet sein. Ggf. kann das Eindrückwerkzeug auch statt des Schleifkontakts S am Stromabnehmerwagen angeordnet werden. Beim Eindrücken der Stromschiene 5 werden die Rastnasen 10, 11 in Richtung Profilboden 6 und auf die Profilschenkel 7, 8 hin weggedrückt und schnappen wieder in ihre in Fig. 1 und 2 gezeigte Stellung, sobald die Stromschiene 5 ganz in die Aufnahmekammer 13 gedrückt ist. Da die Profilschenkel 7, 8 ebenfalls elastisch sind, geben diese beim Eindrücken der Stromschiene 5 ebenfalls etwas nach, so dass schräg nach innen zur Aufnahmekammer 13 hin geneigten Flächen der Haltemittel 10 und 11, 110 und 111, 210 und 211 bzw. 310 und 311 das Einsetzen der Stromschiene 5 in die Aufnahmekammer 13 weiter vereinfachen.

Um die Montage weiter zu erleichtern und effizienter zu machen, können bei der in Fig. 1 gezeigten Anordnung von mehreren parallelen Leitungssträngen 3, 3', 3" bereits in zwei oder mehr Isolierprofile 4 eingelegte Stromschienen 4 gleichzeitig von den jeweiligen Montagekammern 12 in die jeweiligen Aufnahmekammern 13 gedrückt werden. Dies kann beispielsweise dadurch erfolgen, dass ein bereits montierter Stromabnehmerwagen mit seinen jeweiligen Schleifkontakten S in die Isolierprofile 4 eingreift und durch Vorbeifahren an der Schleifleitung 1 die eingelegten Stromschienen von den jeweiligen Montagekammern 12 in die jeweiligen Aufnahmekammern 13 drückt.

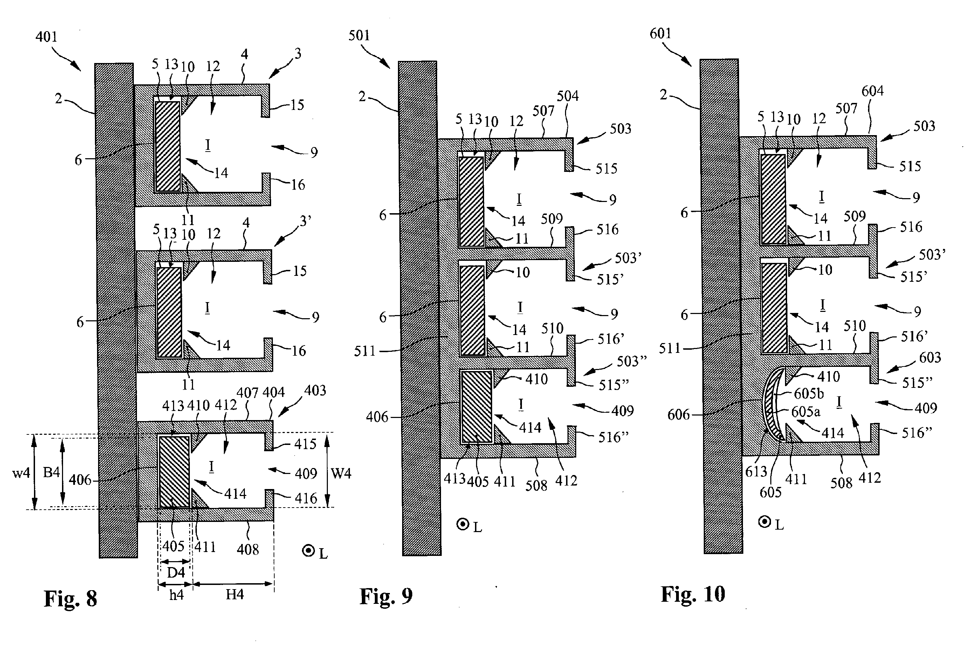

Eine in Fig. 8 im Querschnitt gezeigte alternative erfindungsgemäße Schleifleitung 401 unterscheidet sich von der in Fig. 1 gezeigten im wesentlichen dadurch, dass ein in Fig. 8 unten gezeigter dritter Leitungsstrang 403 anders ausgebildet ist als die beiden oberen Leitungsstränge 3, 3'. Für gleiche Teile werden deshalb gleiche Bezugszeichen verwendet, und die Ausführungen zur Schleifleitung 1 gelten entsprechend.

Wie in Fig. 8 gut erkennbar, weist ein unteres Isolierprofil 404 des unteren Leitungsstrangs 403 einen zu den Isolierprofilen 4 unterschiedlichen Querschnitt auf. Dabei ist die Höhe h4 der Aufnahmekammer 413 größer als die Höhe h der Aufnahmekammer 13, während die Weite w4 der Aufnahmekammer 413 kleiner ist als die Weite w der Aufnahmekammer 13. Dies hat zur Folge, dass die Stromschiene 5 eine zu große Breite B für die Aufnahmekammer 413 aufweist und deshalb nicht darin eingesetzt werden kann. Nur eine Stromschiene 405 mit der Breite B4 und der Dicke B4 passt sauber in die Aufnahmekammer 413 und wird dort im Betrieb gut gehalten. Die vorderen Enden der Profilschenkel 407, 408 weisen wiederum durch Haltevorsprünge 415, 416 auf.

Umgekehrt kann die Stromschiene 405 aufgrund ihrer Dicke D4, welche größer ist als die Höhe h der Aufnahmekammer 13 des Isolierprofils 4, nicht in die Aufnahmekammer 13 eingesetzt werden.

Bevorzugt kann diese Ausführung verwendet werden, um bereits bei der Montage vor Ort eine Verwechslung zwischen den für die Energieübertragung vorgesehenen Stromschienen 5 der Leitungsstränge 3, 3' mit der als Schutzleiter und/oder Erdung (PE) vorgesehenen Stromschiene 405 des Leiterstrangs 403 zu vermeiden.

Anstelle der in Fig. 8 gezeigten unterschiedlichen rechteckförmigen Querschnitten der Aufnahmekammern 13 bzw. 413 und der Stromschienen 5 bzw. 405 kann die Verwechslungssicherheit auch auf andere Weise sichergestellt werden. Beispielsweise können die für die Energieübertragung vorgesehenen Stromschienen einen rechteckigen und die für die Erdung vorgesehenen Stromschienen runden oder fünfeckigen, sechseckigen oder polygonalen Querschnitt aufweisen oder umgekehrt,

Eine in Fig. 9 im Querschnitt gezeigte alternative erfindungsgemäße Schleifleitung 501 unterscheidet sich von der in Fig. 8 gezeigten Schleifleitung 401 im wesentlichen dadurch, dass dort nicht drei einzelne Isolierprofile 4, 4, 404 verwendet werden, sondern ein einziges erfindungsgemäßes Isolierprofil 504, welches drei Leitungsstränge 503, 503' und 503" aufnimmt. Die Ausbildung der Montagekammern 12 bzw. 412, der Aufnahmekammern 13 bzw. 413 und der Haltemittel 10, 11 bzw. 410, 411 sowie der Stromschienen 5, 405 jedoch entspricht der in Fig. 8 gezeigten Ausführung. Ansonsten werden für gleiche Teile wieder gleiche Bezugszeichen verwendet, und die Ausführungen zur Schleifleitung 401 gelten entsprechend.

Das Isolierprofil 504 ist einstückig ausgebildet und weist vier Profilschenkel 507, 508, 509 und 510 auf, welche sich senkrecht von einer gemeinsamen Profilbodenplatte 511 erstrecken. An ihren in Fig. 9 rechten, freien Enden weisen die äußeren Profilschenkel 507 und 508 wiederum Haltevorsprünge 515, 516" auf Die inneren Profilschenkel 509 und 510 hingegen bilden jeweils gemeinsame Profilschenkel für die beiden angrenzenden Montagekammern 12, 12 bzw. 12 und 412 bzw. Aufnahmekammern 13, 13 bzw. 13 und 413. Dies bedeutet dass die vorderen freien Enden der Profilschenkel 508 und 509 T-förmig ausgebildet sind und dadurch jeweils Haltevorsprünge 516, 515' bzw. 516', 516" für beide Seiten ausbilden.

Die Ausführung nach Fig. 9 erlaubt eine schnelle und platzsparende Montage der Schleifleitung, da nur ein Isolierprofil 504 montiert werden muss. Zudem wird aufgrund der Doppelverwendung der inneren Profilschenkel 509. 510 als Profilschenkel für jeweils zwei Montagekammern 12, 12 bzw. 12 und 412 Material und Raum gespart.

Eine in Fig. 10 im Querschnitt gezeigte alternative erfindungsgemäße Schleifleitung 601 unterscheidet sich von der in Fig. 9 gezeigten Schleifleitung 501 im wesentlichen dadurch, dass dort zum verwechslungssicheren Einsetzen einer Stromschiene 605 eine Aufnahmekammer 613 anders ausgebildet ist. Ansonsten werden für gleiche Teile wieder gleiche Bezugszeichen verwendet, und die Ausführungen zur Schleifleitung 501 gelten entsprechend.

Die Stromschiene 605 weist mondförmigen Querschnitt auf und besteht aus einer Trägerschicht 605a, bevorzugt aus Aluminium, und einer Gleitschicht 605b, bevorzugt aus Kupfer oder Gleitstahl, da sich Aluminium weniger als Gleitschicht für die Schleifkontakte S eignet, aber kostengünstiger und leichter als Kupfer ist. Ein Leitungsstrang 603 mit Stromschiene 605 ist bevorzugt wieder als Schutzleiter und/oder Erdung (PE) vorgesehen, während die beiden anderen Leitungsstränge 503, 503' für die Energieübertragung vorgesehen sind.

Um zu verhindern, dass die Stromschiene 605 mit der Gleitschicht 605b verkehrt herum in die Aufnahmekammer 613 eingesetzt wird, weist die Aufnahmekammer 613 eine an die Stromschiene 605 angepassten mondförmigen Querschnitt auf, der genauso groß oder nur geringfügig größer ist.

Weiter kann durch die andersartig geformte Stromschiene 605 und Aufnahmekammer 613 verhindert werden, dass insbesondere bei der Montage vor Ort die für die Energieübertragung vorgesehenen Stromschienen 5 der Leitungsstränge 503, 503' mit der als Schutzleiter und/oder Erdung (PE) vorgesehenen Stromschiene 605 des Leiterstrangs 603 verwechselt und falsch eingesetzt werden und umgekehrt.

Anstelle der in Fig. 10 gezeigten mondförmigen Ausbildung der Stromschiene 605 und der Aufnahmekammer 613 können auch andere Formen gewählt werden, beispielsweise eine V-Form mit entsprechender "Krümmung", so dass die Spitze des V in Richtung Profilboden zeigt. Diese Formen einschließlich der in Fig. 10 gezeigten können auch bei einteiligen Stromschienen aus einem Material verwendet werden, um eine eindeutige Zuordnung von Stromschiene und Aufnahmekammer zu erreichen.

Anstelle der in Fig. 10 gezeigten mondförmigen Ausbildung der Stromschiene 605 und der Aufnahmekammer 613 können auch andere Formen gewählt werden, beispielsweise eine V-Form mit entsprechender "Krümmung", so dass die Spitze des V in Richtung Profilboden zeigt. Diese Formen einschließlich der in Fig. 10 gezeigten können auch bei einteiligen Stromschienen aus einem Material verwendet werden, um eine eindeutige Zuordnung von Stromschiene und Aufnahmekammer zu erreichen.

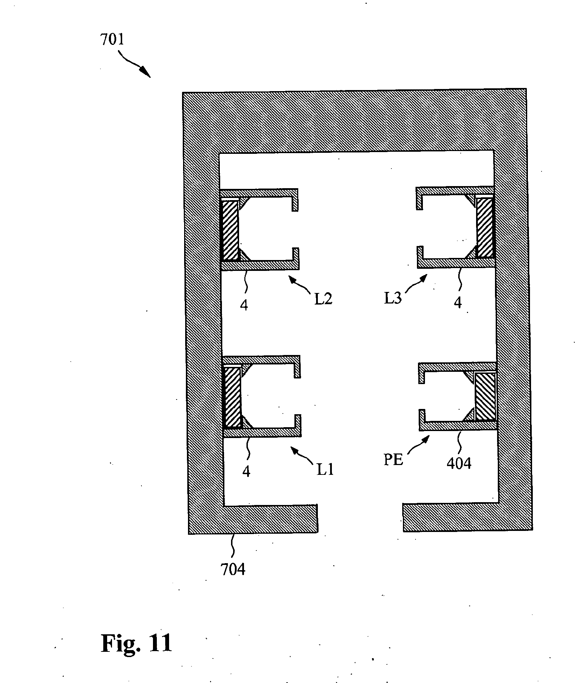

In Fig. 11 ist eine erfindungsgemäße Kastenschleifleitung 701 mit drei Phasenleitersträngen L1, L2 und L3 sowie einem kombinierten Schutz-Erd-Leiterstrang PE gezeigt. Die Phasenleitersträngen L1, L2 und L3 werden analog zu Leiterstrang 3 gebildet, während der Schutz-Erd-Leiterstrang PE entsprechend dem Leiterstrang 403 aus Fig. 8 ausgebildet ist.

Dabei können die einzelnen Isolierprofile 4 bzw. 404 vorteilhaft einstückig mit dem Kastenschleifleitungsprofil 704 hergestellt sein, wie in Fig. 11 angedeutet. Das Kastenschleifleitungsprofil 704 bildet dann jeweils den Profilboden der einzelnen Leitungsstränge L1, L2, L3 und PE aus.

In einer nicht gezeigten Ausführung können die Haltemittel 10 und 11, 110 und 111, 210 und 211, 310 und 311 bzw. 410 und 411 vorteilhaft durchgängig über die gesamte Länge der Isolierprofile 4, 104, 204, 304 bzw. 404 verlaufen. Alternativ können die Haltemittel 10 und 11, 110 und 111, 210 und 211, 310 und 311 bzw. 410 und 411 auch vorteilhaft unterbrochen sein oder nur an bestimmten, vorzugsweise gleich weit voneinander entfernten Stellen an den Profilschenkeln 7, 8 angeordnet sein. Dabei können die Haltemittel 10 und 11, 110 und 111, 210 und 211 bzw. 310 und 311 der gegenüberliegenden Profilschenkel 7, 8 bzw. 407, 408 dann vorteilhaft einander unmittelbar gegenüber liegen oder in Längsrichtung L zueinander versetzt sein.

### Bezugszeichenliste

- 1: Schleifleitung
- 2: Tragstruktur
- 3, 3', 3": Leitungsstränge
- 4: U-förmiges Isolierprofil
- 5: Stromschiene
- 6: Profilboden
- 7,8: Profilschenkel
- 9: Einführöffnung
- 10, 11: Rastnasen (Haltemittel)
- 12: Montagekammer
- 13: Aufnahmekammer
- 14: Montageöffnung
- 15, 16: Haltevorsprünge
- 17, 18: Gleitflächen der Rastnasen
- 19, 20: Rastflächen der Rastnasen
- 104: alternatives Isolierprofil
- 110, 111: Raststege (Haltemittel)
- 115, 116: alternative Haltevorsprünge
- 204: alternatives Isolierprofil
- 210, 211: sägezahnförmiges Rastprofil (Haltemittel)
- 210a, 211a: unterste Rastnasen
- 210b, 211: mittlere Rastnasen
- 205: flachere Stromschiene
- 304: alternatives Isolierprofil
- 310, 311: gestuftes sägezahnförmiges Rastprofil (Haltemittel)
- 310a, 311a: unterste Rastnasen
- 310b, 311b: mittlere Rastnasen
- 401: alternative Schleifleitung mit Erdungs-Leitungsstrang
- 403: Leitungsstrang für Erdung
- 404: U-förmiges Erdungs-Isolierprofil
- 405: Stromschiene für Erdung
- 406: Profilboden Erdungs-Isolierprofil
- 407, 408: Profilschenkel Erdungs-Isolierprofil
- 409: Einführöffnung Erdungs-Isolierprofil
- 410, 411: Rastnasen (Haltemittel) Erdungs-Isolierprofil
- 412: Montagekammer Erdungs-Isolierprofil
- 413: Aufnahmekammer Erdungs-Isolierprofil
- 414: Montageöffnung Erdungs-Isolierprofil
- 415, 416: Haltevorsprünge Erdungs-Isolierprofil
- 501: alternative Schleifleitung mit Erdungs-Leitungsstrang
- 503, 503', 503": Leitungsstränge
- 504: alternatives Isolierprofil
- 507, 508: äußere Profilschenkel
- 509, 510: innere Profilschenkel
- 511: gemeinsame Profilbodenplatte
- 515, 516": Haltevorsprünge äußere Profilschenkel
- 515', 515", 516', 516": T-förmige Haltevorsprünge innere Profilschenkel
- 601: alternative Schleifleitung mit Erdungs-Leitungsstrang
- 603: Leitungsstrang für Erdung
- 604: alternatives Isolierprofil
- 605: alternative mondförmige Stromschiene
- 605a: Trägerschicht mondförmige Stromschiene
- 605b: Gleitschicht mondförmige Stromschiene
- 606: sichelförmiger Profilboden
- 613: mondförmige Aufnahmekammer
- 701: Kastenschleifleitung
- 704: Isolierprofil für Kastenschleifleitung

- B, B4: Breite der Stromschiene 5, 205 bzw. 412
- d: Dicke der flacheren Stromschiene 205
- D, D4: Dicke der dickeren Stromschiene 5 bzw. 405
- H, h4: Höhe der Aufnahmekammer 13 bzw. 413
- H, H4: Höhe der Montagekammer 12 bzw. 412
- w, w4: Breite der Aufnahmekammer 13 bzw. 413
- W, W4: Breite der Montagekammer 12 bzw. 412
- I: Innenraum
- L: Längsrichtung Isolierprofil bzw. Schleifleitung
- L1, L2, L3: Leiterstränge für Phasenleiter
- PE: Leiterstränge für Schutzleiter und Erdungs-/Nullleiter
- S: Schleifkontakt Stromabnehmer

## Patentansprüche

1. Isolierprofil (4; 104; 204; 304; 404; 504; 704) für eine Schleifleitung (1; 401; 501; 601; 701) mit mindestens zwei in eine Längsrichtung (L) des Isolierprofils (4; 104; 204; 304; 404; 504; 704) verlaufenden Profilschenkeln (7, 8; 407, 408; 507-510; 407, 408; 507-510), die mindestens eine Aufnahmekammer (13; 413; 613) zum Halten einer Stromschiene (5; 205; 405; 605) umgeben, wobei die Aufnahmekammer (13; 413; 613) eine in Längsrichtung (L) verlaufende Montageöffnung (14) aufweist, wobei sich an die Aufnahmekammer (13; 413; 613) eine zwischen den Profilschenkeln (7, 8; 407, 408; 507-510; 407, 408; 507-510) angeordnete Montagekammer (12; 412) mit einer in Längsrichtung (L) verlaufenden Einführöffnung (9; 409) anschließt, **dadurch gekennzeichnet, dass** an den Profilschenkeln (7, 8; 407, 408; 507-510) im Bereich der Montagekammer (12; 412) bevorzugt einwärts gerichtete Haltevorsprünge (15, 16; 115, 116) vorgesehen sind.

2. Isolierprofil (4; 104; 204; 304; 404; 504; 704) nach Anspruch 1, **dadurch gekennzeichnet, dass** zwischen Aufnahmekammer (13; 413; 613) und Montagekammer (12; 412) Haltemittel (10, 11; 110, 111; 210, 211; 310, 311) zum Halten der Stromschiene (5; 205; 405; 605) in der Aufnahmekammer (13; 413; 613) vorgesehen sind.

3. Isolierprofil (4; 104; 204; 304; 404; 504; 704) nach Anspruch 2, **dadurch gekennzeichnet, dass** die Haltemittel (10, 11; 110, 111; 210, 211; 310, 311) an mindestens einem der Profilschenkel (7, 8; 407, 408; 507-510; 407, 408; 507-510) angeordnet sind.

4. Isolierprofil (4; 104; 204; 304; 404; 504; 704) nach Anspruch 3, **dadurch gekennzeichnet, dass** die Haltemittel (10, 11; 110, 111; 210, 211; 310, 311) in Längsrichtung (L) unterbrochen sind.

5. Isolierprofil (4; 104; 204; 304; 404; 504; 704) nach Anspruch 3 oder 4, **dadurch gekennzeichnet, dass** die Haltemittel (10, 11; 110, 111; 210, 211; 310, 311) an beiden Profilschenkeln (7, 8; 407, 408; 507-510) angeordnet sind.

6. Isolierprofil (4; 104; 204; 304; 404; 504; 704) nach Anspruch 5, **dadurch gekennzeichnet, dass** an einander gegenüberliegenden Profilschenkeln (7, 8; 407, 408; 507-510) angeordnete Haltemittel (10, 11; 110, 111; 210, 211; 310, 311) in Längsrichtung (L) versetzt zueinander angeordnet sind.

7. Isolierprofil (4; 104; 204; 304; 404; 504; 704) nach einem der Ansprüche 2 bis 6, **dadurch gekennzeichnet, dass** die Haltemittel (10, 11; 110, 111; 210, 211; 310, 311) von der Montagekammer (12; 412) aus gesehen mindestens eine von den Profilschenkeln (7, 8; 407, 408; 507-510) zur Aufnahmekammer (13; 413; 613) hin geneigte Gleitfläche (17, 18) aufweisen, und/oder dass die Haltemittel (10, 11; 210, 211; 310, 311) von der Aufnahmekammer (13; 413; 613) aus gesehen mindestens eine im wesentlichen senkrecht von den Profilschenkeln (7, 8; 407, 408; 507-510) abstehende Haltefläche (19, 20) aufweisen.

8. Isolierprofil (4; 104; 204; 304; 404; 504; 704) nach einem der voranstehenden Ansprüche, **dadurch gekennzeichnet, dass** die Haltemittel (310, 311) von der Montagekammer (12; 412) zur Aufnahmekammer (13; 413; 613) hin kürzer werdende Rastnasen (310a, 310b, 311a, 311b) aufweisen.

9. Isolierprofil (4; 104; 204; 304; 404; 504; 704) nach einem der voranstehenden Ansprüche, **dadurch gekennzeichnet, dass** die Haltemittel (210, 211; 310, 311) sägezahnförmig ausgebildet sind.

10. Isolierprofil (4; 104; 204; 304; 404; 504; 704) nach einem der voranstehenden Ansprüche, **dadurch gekennzeichnet, dass** die Weite (w; w4) der Aufnahmekammer (13; 413; 613) im wesentlichen der Breite (B; b; B4) der Stromschiene (5; 205; 405; 605) entspricht oder geringfügig größer ist, und/oder dass die Höhe (h) der Aufnahmekammer (13; 413; 613) im wesentlichen der Dicke (D; d) der Stromschiene (5; 205; 405; 605) entspricht oder geringfügig größer ist.

11. Isolierprofil (4; 104; 204; 304; 404; 504; 704) nach einem der voranstehenden Ansprüche, **dadurch gekennzeichnet, dass** die Höhe (H; H4) der Montagekammer (12; 412) kleiner ist als die Breite (B; b; B4) der Stromschiene (5; 205; 405; 605), bevorzugt kleiner als ein Viertel und besonders bevorzugt kleiner als die Hälfte der Breite (B; b; B4) der Stromschiene (5; 205; 405; 605).

12. Isolierprofil (4; 104; 204; 304; 404; 504; 704) nach einem der voranstehenden Ansprüche, **dadurch gekennzeichnet, dass** die Höhe (H; H4) der Montagekammer (12; 412) größer ist als die Dicke (D; d; D4) der Stromschiene (5; 205; 405; 605), bevorzugt größer als das Anderthalbfache und besonders bevorzugt größer als das Doppelte der Dicke (D; d; D4) der Stromschiene (5; 205; 405; 605).

13. Isolierprofil (504; 604; 704) nach einem der voranstehenden Ansprüche, **dadurch gekennzeichnet, dass** es mehrere Aufnahmekammern (13; 413; 613) aufweist, wobei bevorzugt mindestens eine der Aufnahmekammern (413; 613) eine andere Form aufweist als die anderen Aufnahmekammern (13).

14. Schleifleitung (1; 401; 501; 601; 701) mit mindestens einem Isolierprofil (4; 104; 204; 304; 404; 504; 704) und mindestens einer darin eingelegten elektrisch leitenden Stromschiene (5; 205; 405; 605), **dadurch gekennzeichnet, dass** das Isolierprofil (4; 104; 204; 304; 404; 504; 704) nach einem der voranstehenden Ansprüche ausgebildet ist.

15. Schleifleitung (1; 401; 501; 601; 701) nach Anspruch 14, **dadurch, gekennzeichnet, dass** die Schleifleitung (1; 401; 501; 601; 701) mehrere, bevorzugt nebeneinander angeordnete Isolierprofile (4; 104; 204; 304; 404) nach einem der Ansprüche 1 bis 13 aufweist.

16. Verfahren zur Herstellung einer Schleifleitung (1; 401; 501; 601; 701) nach einem der Ansprüche 14 bis 15, **gekennzeichnet durch** die Schritte:
a) Einlegen, Einziehen oder Einschieben mindestens einer Stromschiene (5; 205; 405; 605) in mindestens eine Montagekammer (12; 412),
b) Eindrücken der Stromschiene (5; 205; 405; 605) von der Montagekammer (12; 412) in die Aufnahmekammer (13; 413; 613).

## Claims

1. Insulating profile (4; 104; 204; 304; 404; 504; 704) for a contact line (1; 401; 501; 601; 701) with at least two profile limbs (7, 8; 407, 408; 507-510; 407, 408; 507-510) which run in a longitudinal direction (L) of the insulating profile (4; 104; 204; 304; 404; 504; 704) and surround at least one receiving chamber (13; 413; 613) for holding a conductor rail (5; 205; 405; 605), wherein the receiving chamber (13; 413; 613) exhibits a mounting opening (14) running in the longitudinal direction (L), wherein the receiving chamber (13; 413; 613) is adjoined by a mounting chamber (12; 412) which is arranged between the profile limbs (7, 8; 407, 408; 507-510; 407, 408; 507-510) with a guide opening (9; 409) running in the longitudinal direction (L), **characterised in that** preferably inwardly directed holding projections (15, 16; 115, 116) are provided on the profile limbs (7, 8; 407, 408; 507-510) in the region of the mounting chamber (12; 412).

2. Insulating profile (4; 104; 204; 304; 404; 504; 704) according to claim 1, **characterised in that** holding means (10, 11; 110, 111; 210, 211; 310, 311) are provided between the receiving chamber (13; 413; 613) and the mounting chamber (12; 412) for holding the conductor rail (5; 205; 405; 605) in the receiving chamber (13; 413; 613).

3. Insulating profile (4; 104; 204; 304; 404; 504; 704) according to claim 2, **characterised in that** the holding means (10, 11; 110, 111; 210, 211; 310, 311) are arranged on at least one of the profile limbs (7, 8; 407, 408; 507-510; 407, 408; 507-510).

4. Insulating profile (4; 104; 204; 304; 404; 504; 704) according to claim 3, **characterised in that** the holding means (10, 11; 110, 111; 210, 211; 310, 311) are interrupted in the longitudinal direction (L).

5. Insulating profile (4; 104; 204; 304; 404; 504; 704) according to claim 3 or 4, **characterised in that** the holding means (10, 11; 110, 111; 210, 211; 310, 311) are arranged on both profile limbs (7, 8; 407, 408; 507-510).

6. Insulating profile (4; 104; 204; 304; 404; 504; 704) according to claim 5, **characterised in that** holding means (10, 11; 110, 111; 210, 211; 310, 311) arranged on opposing profile limbs (7, 8; 407, 408; 507-510) are arranged offset in relation to one another in the longitudinal direction (L).

7. Insulating profile (4; 104; 204; 304; 404; 504; 704) according to one of claims 2 to 6, **characterised in that** viewed from the mounting chamber (12; 412) the holding means (10, 11; 110, 111; 210, 211; 310, 311) exhibit at least one inclined sliding face (17, 18) which is inclined from the profile limbs (7, 8; 407, 408; 507-510) to the receiving chamber (13; 413; 613), and/or **in that** viewed from the receiving chamber (13; 413; 613) the holding means (10, 11; 210, 211; 310, 311) exhibit at least one holding face (19, 20) which essentially protrudes perpendicularly from the profile limbs (7, 8; 407, 408; 507-510).

8. Insulating profile (4; 104; 204; 304; 404; 504; 704) according to one of the preceding claims, **characterised in that** the holding means (310, 311) exhibit detent noses (310a, 310b, 311a, 311b) which become shorter from the mounting chamber (12; 412) to the receiving chamber (13; 413; 613).

9. Insulating profile (4; 104; 204; 304; 404; 504; 704) according to one of the preceding claims, **characterised in that** the holding means (210, 211; 310, 311) are sawtooth-shaped.

10. Insulating profile (4; 104; 204; 304; 404; 504; 704) according to one of the preceding claims, **characterised in that** the width (w; w4) of the receiving chamber (13; 413; 613) essentially corresponds to the breadth (B; b; B4) of the conductor rail (5; 205; 405; 605) or is slightly greater, and/or **in that** the height (h) of the receiving chamber (13; 413; 613) essentially corresponds to the thickness (D; d) of the conductor rail (5; 205; 405; 605) or is slightly greater.

11. Insulating profile (4; 104; 204; 304; 404; 504; 704) according to one of the preceding claims, **characterised in that** the height (H; H4) of the mounting chamber (12; 412) is smaller than the breadth (B; b; B4) of the conductor rail (5; 205; 405; 605), preferably smaller than a quarter and particularly preferably smaller than half of the breadth (B; b; B4) of the conductor rail (5; 205; 405; 605).

12. Insulating profile (4; 104; 204; 304; 404; 504; 704) according to one of the preceding claims, **characterised in that** the height (H; H4) of the mounting chamber (12; 412) is greater than the thickness (D; d; D4) of the conductor rail (5; 205; 405; 605), preferably greater than one and a half times and particularly preferably greater than double the thickness (D; d; D4) of the conductor rail (5; 205; 405; 605).

13. Insulating profile (504; 604; 704) according to one of the preceding claims, **characterised in that** it exhibits a plurality of receiving chambers (13; 413; 613), wherein preferably at least one of the receiving chambers (413; 613) exhibits a different shape from the other receiving chambers (13).

14. Contact line (1; 401; 501; 601; 701) with at least one insulating profile (4; 104; 204; 304; 404; 504; 704) and at least one electrically conducting conductor rail (5; 205; 405; 605) placed therein, **characterised in that** the insulating profile (4; 104; 204; 304; 404; 504; 704) is embodied according to one of the preceding claims.

15. Contact line (1; 401; 501; 601; 701) according to claim 14, **characterised in that** the contact line (1; 401; 501; 601; 701) exhibits a plurality of insulating profiles (4; 104; 204; 304; 404) preferably arranged next to one another, according to one of claims 1 to 13.

16. Method for producing a contact line (1; 401; 501; 601; 701) according to one of claims 14 to 15, **characterised by the steps:**
a) at least one conductor rail (5; 205; 405; 605) is placed, drawn into or pushed into at least one mounting chamber (12; 412),
b) the conductor rail (5; 205; 405; 605) is pressed into the receiving chamber (13; 413; 613) from the mounting chamber (12; 412).

## Revendications

1. Profilé isolant (4 ; 104 ; 204 ; 304 ; 404 ; 504 ; 704) pour une ligne de contact (1 ; 401 ; 501 ; 601 ; 701) comprenant au moins deux branches profilées (7, 8 ; 407, 408 ; 507 - 510 ; 407, 408 ; 507 - 510) s'étendant dans une direction longitudinale (L) du profilé isolant (4 ; 104 ; 204 ; 304 ; 404 ; 504 ; 704), lesquelles entourent au moins une chambre de réception (13 ; 413 ; 613) servant à maintenir un rail conducteur (5 ; 205 ; 405 ; 605), sachant que la chambre de réception (13 ; 413 ; 613) présente une ouverture de montage (14) s'étendant dans une direction longitudinale (L), sachant qu'une chambre de montage (12 ; 412) disposée entre les branches profilées (7, 8 ; 407, 408 ; 507 - 510 ; 407, 408 ; 507 - 510), pourvue d'une ouverture d'introduction (9 ; 409) s'étendant dans une direction longitudinale (L) se raccorde à la chambre de réception (13 ; 413 ; 613), **caractérisé en ce que** des parties faisant saillie de maintien (15, 16 ; 115, 116) orientées de manière préférée vers l'intérieur sont prévues au niveau des branches profilées (7, 8 ; 407, 408 ; 507 - 510).

2. Profilé isolant (4 ; 109 ; 204 ; 304 ; 404 ; 504 ; 704) selon la revendication 1, **caractérisé en ce que** des moyens de maintien (10, 11 ; 110, 111 ; 210, 211 ; 310, 311) servant à maintenir le rail conducteur (5 ; 205 ; 405 ; 605) dans la chambre de réception (13 ; 413 ; 613) sont prévus entre la chambre de réception (13 ; 413 ; 613) et la chambre de montage (12 ; 412).

3. Profilé isolant (4 ; 104 ; 204 ; 304 ; 404 ; 504 ; 704) selon la revendication 2, **caractérisé en ce que** les moyens de maintien (10, 11 ; 110, 111 ; 210, 211 ; 310, 311) sont disposés au niveau au moins d'une des branches profilées (7, 8 ; 407, 408 ; 507 - 510 ; 407, 408 ; 507 - 510).

4. Profilé isolant (4 ; 104 ; 204 ; 304 ; 404 ; 504 ; 704) selon la revendication 3, **caractérisé en ce que** les moyens de maintien (10, 11 ; 110, 111 ; 210, 211 ; 310, 311) sont interrompus dans la direction longitudinale (L).

5. Profilé isolant (4 ; 104 ; 204 ; 304 ; 404 ; 504 ; 704) selon la revendication 3 ou 4, **caractérisé en ce que** les moyens de maintien (10, 11 ; 110, 111 ; 210, 211 ; 310, 311) sont disposés au niveau des deux branches profilées (7, 8 ; 407, 408 ; 507 - 510).

6. Profilé isolant (4 ; 104 ; 204 ; 304 ; 404 ; 504 ; 704) selon la revendication 5, **caractérisé en ce que** des moyens de maintien (10, 11 ; 110, 111 ; 210, 211 ; 310, 311) disposés au niveau de branches profilées (7, 8 ; 407, 408 ; 507 - 510) se faisant face sont disposés de manière décalée les uns par rapport aux autres dans la direction longitudinale (L).

7. Profilé isolant (4 ; 109 ; 204 ; 304 ; 404 ; 504 ; 704) selon l'une quelconque des revendications 2 à 6, **caractérisé en ce que** les moyens de maintien (10, 11 ; 110, 111 ; 210, 211 ; 310, 311) présentent, vus depuis la chambre de montage (12 ; 412), au moins une surface de glissement (17, 18) inclinée depuis les branches profilées (7, 8 ; 407, 408 ; 507 - 510) en direction de la chambre de réception (13 ; 413 ; 613), et/ou **en ce que** les moyens de maintien (10, 11 ; 210, 211 ; 310, 311) présentent, vus depuis la chambre de réception (13 ; 413 ; 613), au moins une surface de maintien (19, 20) faisant saillie essentiellement de manière perpendiculaire des branches profilées (7, 8 ; 407, 408 ; 507 - 510).

8. Profilé isolant (4 ; 104 ; 204 ; 304 ; 404 ; 504 ; 704) selon l'une quelconque des revendications précédentes, **caractérisé en ce que** les moyens de maintien (310, 311) présentent des ergots d'arrêt (310a, 310b, 311a, 311b) devenant plus courts depuis la chambre de montage (12 ; 412) en direction de la chambre de réception (13 ; 413 ; 613).

9. Profilé isolant (4 ; 104 ; 204 ; 304 ; 404 ; 504 ; 704) selon l'une quelconque des revendications précédentes, **caractérisé en ce que** les moyens de maintien (210, 211 ; 310, 311) sont réalisés de manière à présenter une forme en dents de scie.

10. Profilé isolant (4 ; 104 ; 204 ; 304 ; 404 ; 504 ; 704) selon l'une quelconque des revendications précédentes, **caractérisé en ce que** la largeur intérieure (w ; w4) de la chambre de réception (13 ; 413 ; 613) correspond essentiellement à la largeur (B ; b ; B4) du rail conducteur (5 ; 205 ; 405 ; 605) ou est légèrement plus grande, et/ou **en ce que** la hauteur (h) de la chambre de réception (13 ; 413 ; 613) correspond essentiellement à l'épaisseur (D ; d) du rail conducteur (5 ; 205 ; 405 ; 605) ou est légèrement plus grande.

11. Profilé isolant (4 ; 104 ; 204 ; 304 ; 404 ; 504 ; 704) selon l'une quelconque des revendications précédentes, **caractérisé en ce que** la hauteur (H ; H4) de la chambre de montage (12 ; 412) est plus petite que la largeur (B ; b ; B4) du rail conducteur (5 ; 205 ; 405 ; 605), de manière préférée est plus petite qu'un quart et en particulier de manière préférée plus petite que la moitié de la largeur (B ; b ; B4) du rail conducteur (5 ; 205 ; 405 ; 605).

12. Profilé isolant (4 ; 104 ; 204 ; 304 ; 404 ; 504 ; 704) selon l'une quelconque des revendications précédentes, **caractérisé en ce que** la hauteur (H ; H4) de la chambre de montage (12 ; 412) est plus grande que l'épaisseur (D ; d ; D4) du rail conducteur (5 ; 205 ; 405 ; 605), de manière préférée est plus grande qu'une fois et demie et de manière particulièrement préférée plus grande que le double de l'épaisseur (D ; d ; D4) du rail conducteur (5 ; 205 ; 405 ; 605).

13. Profilé isolant (504 ; 604 ; 704) selon l'une quelconque des revendications précédentes, **caractérisé en ce que** le profilé isolant présente plusieurs chambres de réception (13 ; 413 ; 613), sachant que de manière préférée au moins une des chambres de réception (413 ; 613) présente une forme autre que les autres chambres de réception (13).

14. Ligne de contact (1 ; 401 ; 501 ; 601 ; 701) comprenant au moins un profilé isolant (4 ; 104 ; 204 ; 304 ; 404 ; 504 ; 704) et au moins un rail conducteur (5 ; 205 ; 405 ; 605) électroconducteur placé dans ledit profilé isolant, **caractérisée en ce que** le profilé isolant (4 ; 104 ; 204 ; 304 ; 404 ; 504 ; 704) est réalisé selon l'une quelconque des revendications précédentes.

15. Ligne de contact (1 ; 401 ; 501 ; 601 ; 701) selon la revendication 14, **caractérisée en ce que** la ligne de contact (1 ; 401 ; 501 ; 601 ; 701) présente plusieurs profilés isolants (4 ; 104 ; 204 ; 304 ; 404), disposés de manière préférée les uns à côté des autres, selon l'une quelconque des revendications 1 à 13.

16. Procédé servant à fabriquer une ligne de contact (1 ; 401 ; 501 ; 601 ; 701) selon l'une quelconque des revendications 14 à 15, **caractérisé par** les étapes suivantes consistant à :
a) placer, tirer ou glisser au moins un rail conducteur (5 ; 205 ; 405 ; 605) dans au moins une chambre de montage (12 ; 412) ;
b) enfoncer le rail conducteur (5 ; 205 ; 405 ; 605) de la chambre de montage (12 ; 412) dans la chambre de réception (13 ; 413 ; 613).
